# EUROPEAN PATENT APPLICATION

(11) **EP 1 507 399 A1**
(43) Date of publication of application: **16.02.2005**
(21) Application number: 04254303.3
(22) Date of filing: 16.07.2004
(51) Int. Cl.: H04N 1/00

(54) **Image capture device loaded with image metadata**

(30) Priority: 25.07.2003 US 627469
(71) Applicant: Hewlett-Packard Development Company, L.P., Houston, TX 77070 (US)
(72) Inventor: Bronstein, Kenneth H., Corvallis OR 97330 (US); Smith, Donald X. (II), Corvallis OR 97330-3264 (US); Barmettler, James W., Corvallis OR 97330 (US); Mull, Larry G., Corvallis OR 97330 (US)
(74) Representative: Jackson, Richard Eric

(57) **Abstract**

A method for associating metadata with captured images includes an image capture device (100) receiving (400) the metadata from an external source (180) and capturing (410) an image with the image capture device (100). The method continues with the image capture device (100) associating (420) the captured image with the metadata, wherein the metadata is received prior to capturing the image.

## Description

### Background of the Invention

With the advent of digital photography, inexpensive and very capable digital cameras as well as associated memory devices are becoming commonplace. This has enabled digital camera users to take a larger number of photographs than was previously possible with an analog camera. Given the capacity of the digital cameras and the memory devices that are available today, an individual can take dozens or perhaps more than a hundred pictures during a single outing. Further, given the current state of personal digital storage technology, these photographs can be stored on a mass storage device, such as an optical disk, and preserved for future generations without any degradation in the quality of the stored photograph.

However, after having used a digital camera for several outings, vacations, and other events, it is not uncommon for the user to have several hundred or even thousands of photographic images stored on the user's mass storage device. Further, after the photographs have been stored on the mass storage device for some time, the user often forgets or at least loses track of the context in which a given photograph was taken. For example, the user may have stored images of a particular natural setting, such as a snow-capped mountain or a river, and not remember the particular outing during which the photographs were taken. At this point, the user may attempt to catalog the stored photographs, a tedious and sometimes fruitless endeavor to undertake after the user has stored hundreds of pictures.

### Brief Description of the Drawings

Figure 1 is a block diagram of an image capture device loaded with image metadata and interfaced with a personal computer according to an embodiment of the invention.
Figure 2 is an image capture device that receives metadata from a transmitter located at a public venue according to another embodiment of the invention.
Figure 3 is a sample list that illustrates the type of metadata that can be loaded into an image capture device according to an embodiment of the invention.
Figures 4A and 4B are two sample lists of metadata that pertain to particular users of an image capture device according to an embodiment of the invention.
Figure 5 is a method for associating metadata with captured images according to an embodiment of the invention.
Figure 6 is a method for associating captured images with metadata according to another embodiment of the invention.

### Description of the Embodiments

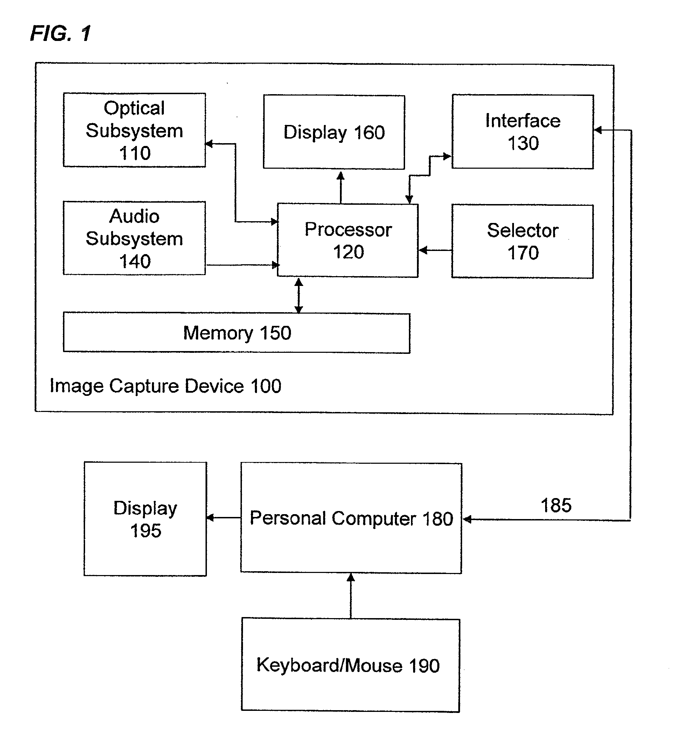

Figure 1 is a block diagram of an image capture device loaded with image metadata and interfaced with a personal computer according to an embodiment of the invention. Images captured by image capture device 100 automatically inherit the metadata attributes loaded into the device, thus providing a way of systematically arranging the images on a user's mass storage device when the images are downloaded from the capture device. This allows the user to search the mass storage device, using his or her own personalized metadata labels as search terms, and retrieve only those captured images that correspond to the metadata labels.

In Figure 1, image capture device 100 includes optical subsystem 110, audio subsystem 140, processor 120, memory 150, display 160, selector 170, and interface 130. However, it should be mentioned that although the image capture device of Figure 1 includes these previously-mentioned elements, the term "image capture device" is contemplated as representing a broad category of devices beyond those primarily used to digitally record photographic images. These include cellular communications devices that perform an image capture function, recording devices that capture sound images, sensing devices that capture images representing vibration patterns, and other devices in which an electronic likeness of a visible form, audio or vibratory pattern is captured and stored in a memory.

In the embodiment of Figure 1, optical subsystem 110 includes the necessary lenses and image acquisition components present in contemporary digital cameras. Thus, optical subsystem 110 may include one or more stepper motors that control the placement of various lenses used to focus an image onto an array of one million to several million photoconductive devices (such as picture elements or "pixels") that allow processor 120 to digitally record and store the image within memory 150. Display 160 of image capture device 100 can be used to present a preview of the image stored in memory 150 to the user of the capture device. Further, display 160 may provide the user with an ability to erase images stored in memory 150, as well as manage the functions of the image capture device.

Image capture device 100 communicates with personal computer 180 by way of communications channel 185. Communications channel 185 represents a serial or parallel connection including at least one wire, or may represent an optical fiber. In either case, communications channel 185 brings about communications in accordance with a universal serial bus (USB) protocol or other standard communications protocol. In another embodiment, communications channel 185 represents a wireless link, such as Bluetooth or any other wireless communications protocol, that brings about communications between personal computer 180 and image capture device 100.

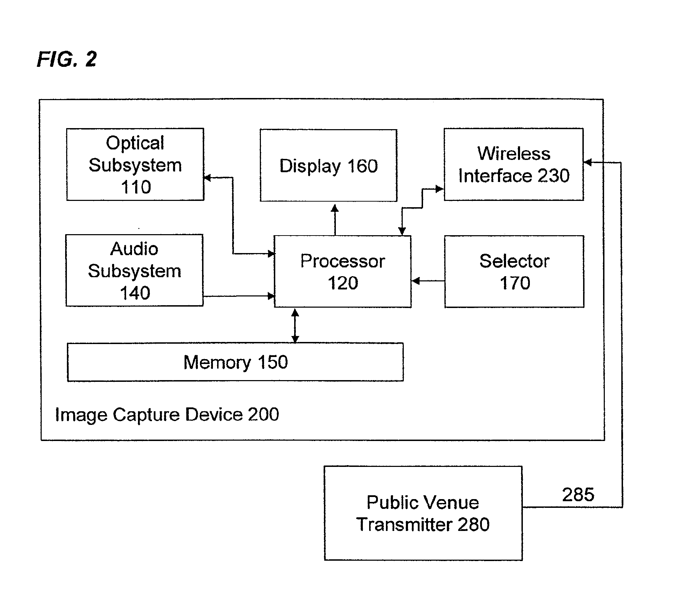

In the embodiment of Figure 1, a user interfaces with personal computer 180 by way of keyboard/mouse 190 to input metadata labels and their corresponding definitions into the computer. The user may view the entered metadata by way of display 195. The metadata is then conveyed to image capture device 100 through communications channel 185 and stored in memory 150. Using personal computer 180, the user may perform one or more of the following:
1. Create a new metadata label
2. View the existing metadata labels
3. Delete a metadata label
4. Add a metadata label obtained from a public venue transmitter (Figure 2)
5. Edit a metadata label (e.g. correct the spelling or grammar of a metadata label)
6. Associate a metadata label with an image
7. Disassociate a metadata label from an image
8. View the metadata labels associated with an image

It is contemplated that a number of metadata labels can be loaded into image capture device 100 prior to the capture of any images. Thus, for example, prior to going on a family vacation, a user may load image capture device 100 with metadata text labels that pertain to the vacation, such as "July 2003", "Canada", "Camping", "Banff", and so forth. Further, this metadata can be immediately associated with some or all of the images captured using image capture device 100. Thus, in the event that the user takes several hundred photographs while on the vacation, all of these photographs can be identified and indexed by way of their associated metadata labels. When these images are stored on a mass storage device, such as a hard drive or an optical disk, the user may easily search for and select pictures having to do with particular metadata labels, such as "Canada".

As previously mentioned, the embodiment of Figure 1 allows the user to load metadata into image capture device 100 prior to the device being used to capture an image. When the user has loaded the metadata information into image capture device 100, personal computer 180 can be decoupled from the image capture device. Thus, as the user is engaging in the normal vacation planning activities, such as arranging for hotel accommodations, locating camping equipment, making flight arrangements, and so forth, the user can also input one or more sets of personalized metadata labels that image capture device 100 can assign to the photographs captured during the vacation. These metadata labels can be totally under the control of the user, and the user may develop as many or as few metadata labels as he or she desires.

While using image capture device 100, display 160 can be used to present the list of prepared metadata labels to the user. By way of selector 170, which may be implemented by way of a touchpad, touch screen, thumb wheel, the user may select the metadata labels to be associated with a given captured image. Thus, for example, if the user has preloaded capture device 100 with the metadata label "Canada", and the user photographs a national monument located on the road leading into Canada, the user may wish to delete the metadata label "Canada" from the particular photograph.

In another embodiment, image capture device 100 may store various metadata labels within memory 150, and selector 170 can be used to assign one or more metadata labels to an individual captured image. This allows the user to identify a particular captured image using as few or as many metadata labels as may be appropriate for the particular image.

Image capture device 100 is shown as including audio subsystem 140, which allows the image capture device to be controlled by way of voice commands. Thus, using audio subsystem 140, a user may annunciate one or more metadata labels selected from a list displayed on display 160 and assign the one or more annunciated labels to an individual captured image. In this embodiment, audio subsystem 140, operating in conjunction with processor 120, need not perform general-purpose voice recognition over a large vocabulary, but need only perform voice recognition over a more limited vocabulary of metadata labels such as those displayed on display 160.

It is contemplated that processor 120 and memory 150 provide a flexible scheme of captured image and metadata management. Thus, in one embodiment of the invention, the image capture device is capable of storing the metadata from more than one user. This allows each user of the capture device to associate his or her own personal metadata labels with the images captured by the particular user. Further, processor 120 may associate one set of metadata labels with a first set of one or more pictures, and associate a second set of metadata labels with a second set of one or more other pictures. This allows the user to develop a first set of metadata labels using personal computer 180 and associate the labels with images 1-20, for example, and associate a second set of metadata labels with images 21-35. It is contemplated that these metadata and image associations can be assigned by way of the user interacting with selector 170 and display 160.

In another embodiment of the invention, image capture device includes a capability to communicate with another, similar image capture device by way of interface 130. This allows a first image capture device, having been loaded with metadata labels, to load these labels into a second image capture device.
Thus, two or more cameras, taken on the same vacation, can synchronize their metadata labels. Thus, when the images from each of the capture devices are merged onto an appropriate storage device, such as a mass storage device coupled to personal computer 180, images from the two capture device can be associated with a consistent set of labels.

In the event that two capture devices include a label that has been defined differently within each capture device, processor 120 of one or both of image capture devices may execute a conflict-resolution algorithm that assigns correct metadata labels to a given captured image based on the definition of the metadata label. In an example, in the event that the metadata label "party" from a first image capture device has been defined as being associated with a political party, while the label "party" from a second image capture device has been defined as being associated with a birthday party, the conflict-resolution algorithm can be used to modify the metadata label to include additional information that allows the user to distinguish between the two labels. In another embodiment, a processor within personal computer 180 performs the conflict resolution when the captured images are downloaded from the capture device.

Processor 120 of one or both of image capture devices 100 may also execute an algorithm that assigns a metadata label to images having different metadata label definitions but sharing a common label definition. For example, in the event that an image from a first capture device is associated with the label "hiking", and an image from a second capture device is associated with the label "camping", and both labels are defined within each capture device as "hiking and camping in the woods this summer", one or both of the image capture devices may assign either the "hiking" or the "camping" metadata label to both images based on their common definition. In another embodiment, a processor within personal computer 180 can perform this assignment when captured images are downloaded from the capture device.

In addition to metadata labels being associated with a group of individual images, in which one or more labels are assigned to each image of the group, metadata labels may also be assigned to a collection of images, in which a particular image is identified as belonging to a collection, and the collection is associated with the metadata labels. Thus, when the user wishes to associate a particular image with the metadata labels associated with a different collection, the user need only assign the image to the different collection and allow the image to inherit the metadata labels of the new collection. By assigning metadata labels to a collection of images, the user can quickly disassociate an image from a first set of labels and then re-associate the image with a second set of labels.

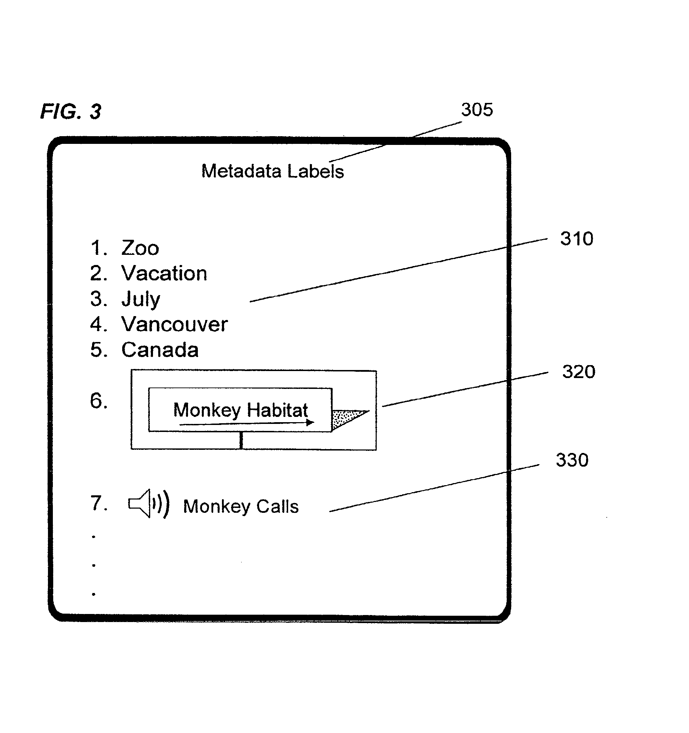

In the context of the present invention, metadata labels may include alphanumeric labels, as well as thumbnail images. Thus, as will be illustrated in Figure 3, a user may wish to assign all photographs of monkeys taken at a city zoo with a metadata graphics object that reads "Monkey Habitat". In this example the graphics object "Monkey Habitat" can be a reduced-size (thumbnail) version of an image previously captured by the image capture device. This allows the user to easily and conveniently assign metadata to a group of pictures.

In addition to alphanumeric and thumbnail images, metadata labels can also include audio recordings. Thus, as described in reference to Figure 3, all images of the monkey habitat taken at a city zoo can be assigned a metadata audio label that corresponds to an audio recording previously captured by the image capture device. Thus, an audio image of the monkey call recorded at the zoo can be assigned to each of the photographs taken of the zoo monkeys.

Figure 2 is an image capture device that receives metadata from a transmitter located at a public venue according to another embodiment of the invention. In Figure 2, image capture device 200 includes many of the features included in image capture device 100, such as optical system 110, audio system 140, display 160, memory 150, processor 120, and selector 170. Image capture device 200 includes wireless interface 230 which detects signals from public venue transmitter 280. Transmitter 280 transmits metadata to the capture device by way of wireless communications channel 285. The signal from transmitter 280 conveys the metadata to image capture device 200, which senses the signal and associates this metadata with one or more of images captured.

In the embodiment of Figure 2, public venue transmitter 280 is contemplated as being a source of metadata labels that are associated with a particular public venue. Thus, for example, public venue transmitter 280 may be located in a zoo, and may broadcast metadata that includes the date and day of the week, city, time, and other pertinent information. In another example, public venue transmitter 280 is placed at a particular location within the public venue, such as outside of the monkey habitat at a city zoo. At this location, public venue transmitter 280 conveys metadata associated with the monkeys living within the habitat. This may include the names of the animals living in the habitat, their ages, species, and so forth. The metadata may also include a graphics object or an audio label associated with the habitat. Thus, any photographs taken of the monkey habitat can be automatically associated with the metadata transmitted from public venue transmitter 280. In another embodiment of the invention, the user may capture one or more images and then select to allow the recently-captured images to be associated with the labels broadcast from public venue transmitter 280.

In the foregoing embodiments, selector 170 has been described as allowing the user to assign one or more metadata labels to an individual image. Selector 170 may also allow the user to perform one or more of the following:
1. Create or define a new metadata label
2. View one or more of the existing metadata label
3. Delete a metadata label
4. Accept metadata labels from external source (public venue transmitter, second image capture device, and so forth)
5. Edit a label (e.g. fix the spelling in a name used as metadata)
6. Associate a metadata label with an image
7. Disassociate some or all metadata labels from an image
8. View the metadata labels placed on an image
9. View a default set of metadata labels that associate with all newly captured images
10. Add a metadata label to the default set
11. Remove a metadata label from the default set
12. Convert a captured image to a metadata label

Other embodiments of the invention may not implement all of the above functions. Still other embodiments may implement functions in addition to those listed above.

Figure 3 is an exemplary list of metadata that can be loaded into an image capture device according to an embodiment of the invention. In Figure 3, metadata 305 includes text labels 310, which include "Zoo", "Vacation", "July", "Vancouver", and "Canada". Metadata 305 also includes a graphics object 320 that represents an image previously captured by the image capture device. In the example of Figure 3, the user has captured an image of the sign or placard that reads, "Monkey Habitat". The user may then choose to assign all pictures taken of the monkey habitat with the metadata graphics object 320. Further, the user may record an audio clip of the monkeys and associate this audio label with one or more captured images as desired.

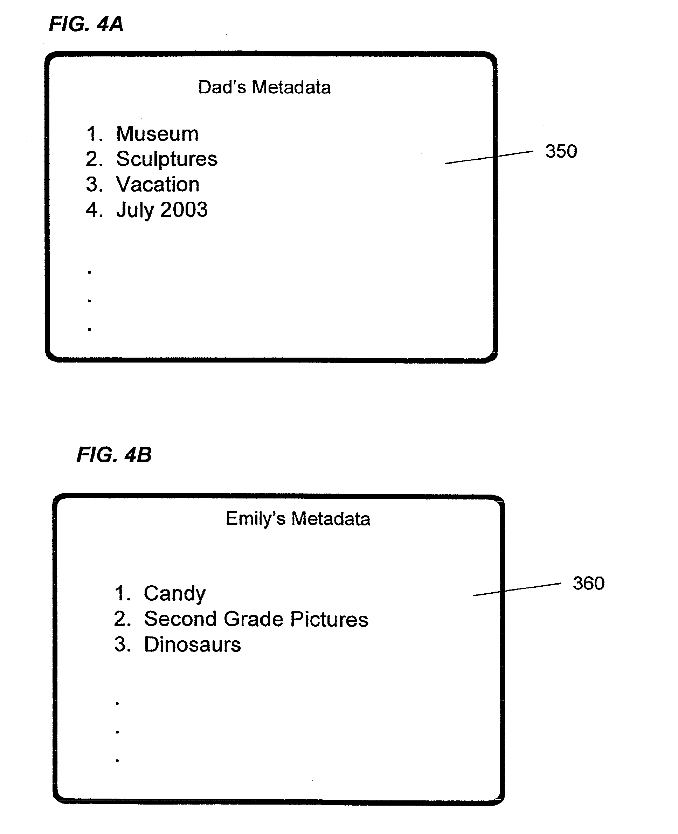

Figures 4A and 4B show two lists of metadata that pertain to particular users of an image capture device according to an embodiment of the invention. As previously mentioned in reference to Figure 1, each user may select a set of his or her own personal metadata labels by way of selector 170. In Figure 4A, a principal user of the image capture device has input metadata labels (350) such as "Museum", "Sculptures", "Vacation", and so forth. Meanwhile, in Figure 4B, a child has input metadata labels (360) for "Candy", "Second-grade class pictures", and so forth. In accordance with this example, nothing prevents the creation of other sets of personalized metadata, perhaps one set for each member of a family.

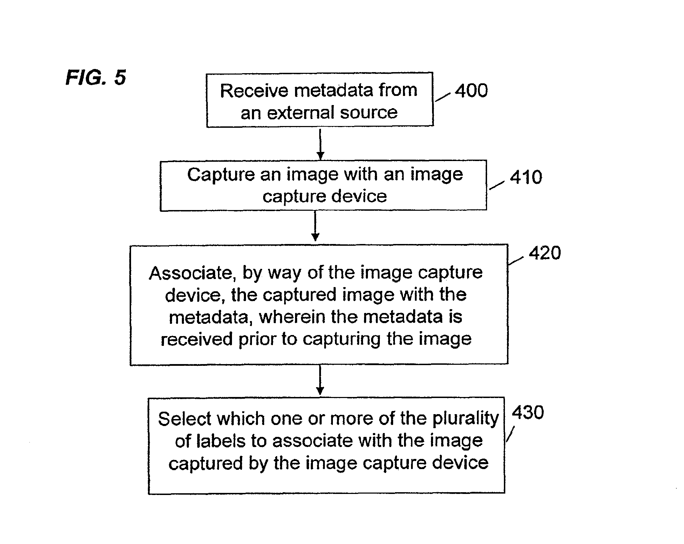

Figure 5 is a method for associating metadata with captured images according to an embodiment of the invention. The image capture device of Figures 1 or 2 may be suitable for performing the method of Figure 5. The method of Figure 5 begins at step 400 in which metadata is received by the image capture device from an external source, such as personal computer 180 of Figure 1, or public venue transmitter 280 of Figure 2. Step 400 may include receiving a signal by way of a wireless interface, or by way of an interface that includes at least one wire or through an optical fiber.

The method continues at step 410 in which an image is captured with the image capture device. At step 420, the image capture device associates the captured image with the metadata, wherein the metadata is received prior to capturing the image. The method continues at step 430 in which the user selects which one or more of the plurality of labels is to be associated with the image captured by the capture device.

In another embodiment, a method for associating metadata with captured images includes only the steps of the image capture device receiving the metadata from an external source (step 400), capturing an image with the image capture device (step 410), and the image capture device associating the captured image with the metadata (step 420), wherein the metadata is received prior to capturing the image.

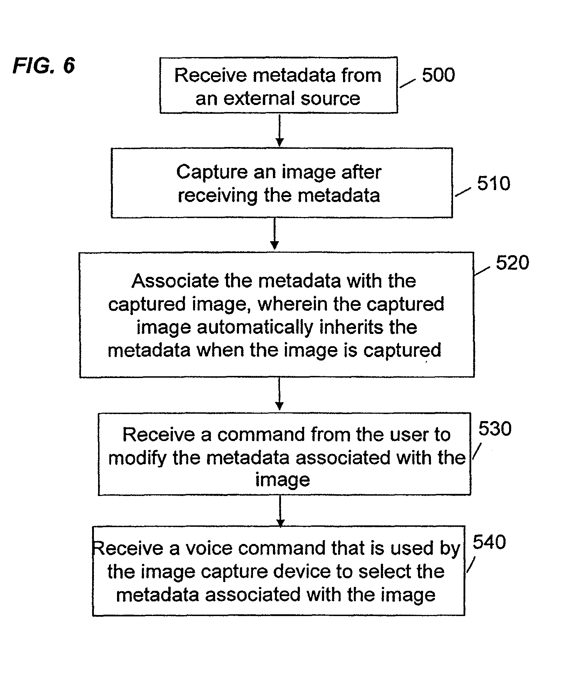

Figure 6 is a method for associating capture images with metadata according to another embodiment of the invention. The image capture device of Figures 1 or 2 interfaced with an external source such as a personal computer or a public venue transmitter, is suitable for performing the method of Figure 6. The method begins at step 500 in which metadata is received from the external source. Step 500 may include receiving metadata over a communications channel that makes use of at least one wire or optical fiber, or may include receiving signals by way of a wireless communications channel. The method continues at step 510 in which an image is captured after receiving the metadata received in step 500.

Step 520 includes associating the metadata with the captured image, wherein the captured image automatically inherits the metadata when the image is captured. At step 530, a command is received from the user to modify the metadata associated with the image. This step may include the user using selector 170 (of Figures 1 and 2) to select one or more metadata labels to associate with the image. This step may also include the use of selector 170 to create, view, or delete a metadata label, add a metadata label obtained from public venue transmitter, edit a metadata label, or to associate, disassociate, or view a metadata label with an image.

Step 530 may also include the use of a personal computer to create a new metadata label, view the existing metadata labels, delete a metadata label, add metadata label obtained from public venue transmitter, edit a metadata label, associate a metadata label with an image, disassociate a metadata label from an image, or to view the metadata labels associated with an image. In the event that the image capture device permits the user to assign audio labels as metadata, the method continues at step 540 in which a voice command is received and used to select the metadata associated with the image.

In another embodiment, a method for associating captured images with metadata in an image capture device includes only the steps of receiving metadata from an external source (step 500), capturing an image after receiving the metadata (step 510), and associating the metadata with the captured image (step 520), wherein the captured image automatically inherits the metadata when the image is captured.

In conclusion, while the present invention has been particularly shown and described with reference to the foregoing preferred and alternative embodiments, those skilled in the art will understand that many variations may be made therein without departing from the spirit and scope of the invention as defined in the following claims. This description of the invention should be understood to include the novel and non-obvious combinations of elements described herein, and claims may be presented in this or a later application to any novel and non-obvious combination of these elements. The foregoing embodiments are illustrative, and no single feature or element is essential to all possible combinations that may be claimed in this or a later application. Where the claims recite "a" or "a first" element or the equivalent thereof, such claims should be understood to include incorporation of one or more such elements, neither requiring nor excluding two or more such elements.

## Claims

1. A method for associating metadata with captured images, comprising:
an image capture device (100) receiving (400) the metadata from an external source (180);
capturing (410) an image with the image capture device (100), and
the image capture device (100) associating (420) the captured image with the metadata, wherein
the metadata is received prior to capturing the image.

2. The method of claim 1, wherein the image capture device receives the metadata from a public venue transmitter (280), and wherein the metadata is associated with the public venue.

3. The method of claim 1, wherein the image capture device receives the metadata by way of a wireline connection (185) and wherein the external source is a personal computer (180) that accepts inputs from a user.

4. The method of claim 1, wherein the metadata includes a plurality of labels (305), and wherein the method additionally comprises a user of the image capture device (100) selecting which of the plurality of labels to associate with the image captured by the image capture device (100).

5. An image capture device (100), comprising:
an interface (130) that receives a plurality of metadata labels (305) from an external source (180) prior to the image capture device (100) capturing an image;
a memory (150) that stores the image; and
a processor (120) that assigns one or more of the plurality of metadata labels to the image under the control of a user of the image capture device (100).

6. The image capture device of claim 5, further comprising an audio subsystem that acquires an audio image and writes the audio image to a memory.

7. The image capture device of claim 5, wherein at least one of the plurality of metadata labels is a text label.

8. The image capture device of claim 5, wherein at least one of the plurality of metadata labels is an audio label.

9. The image capture device of claim 5, wherein at least one of the plurality of metadata labels is a graphics object.

10. The image capture device of claim 5, further comprising a selector that enables a user to change the plurality of metadata labels to be associated with an image.

11. The image capture device of claim 5, further comprising an audio sensor that recognizes a voice input as corresponding to a certain one of the plurality of metadata labels.

12. The image capture device of claim 5, wherein the external source is a second image capture device.
